# EUROPEAN PATENT SPECIFICATION

(11) **EP 3 207 837 B1**
(45) Date of publication and mention of the grant of the patent: **26.09.2018**
(21) Application number: 17000186.1
(22) Date of filing: 07.02.2017
(51) Int. Cl.: A47J 31/40, A47J 31/58

(54) **CONTAINER OF A SUBSTANCE OF INGREDIENTS FOR PREPARING BEVERAGES**
BEHÄLTER EINER SUBSTANZ VON ZUTATEN ZUR ZUBEREITUNG VON GETRÄNKEN
RÉCIPIENT POUR SUBSTANCE D'INGRÉDIENTS POUR LA PRÉPARATION DE BOISSONS

(30) Priority: 19.02.2016 IT UB20160831
(43) Date of publication of application: 23.08.2017
(73) Proprietor: Sandenvendo Europe S.p.a., 15030 Coniolo (AL) (IT)
(72) Inventor: Spagna, Danilo, 15030 Coniolo (AL) (IT)
(74) Representative: Garavelli, Paolo

(56) References cited:
- EP-A2- 1 867 258
- US-A1- 2002 145 010
- US-A1- 2014 352 548

## Description

The present invention refers to a container of a substance of ingredients for preparing beverages.

In particular, the present invention refers to systems for preparing beverages comprising containers with batching devices for powdery substances and delivering devices for adding a metered amount of ingredients such as, for example, coffee, water, sugar cocoa, milk, tea.

Apparatuses are known for performing repeated and identical operations for measuring and separating a pre-established volume of solid, liquid or fluid material contained in measuring chambers which are moved, making it possible to separate a fluid or powder, through sealed movements, and with solid material, through oscillating movements.

Containers are known, which are equipped with special means of an annular or spherical type for delivering small items or disk-shaped tablets. Such special means, having cylindrical, disk or spherical shape, are kept in the same position when delivering several items and subjected to a rotation, step by step or alternately, around their own axis to allow filling.

The prior art is given by patents dealing with containers of powdery material, having an outlet usually closed by an elastomeric plug equipped with two nearby diaphragms, an internal one and an external one. The space delimited by the two nearby diaphragms allows measuring the desired dose of powdery material, and at the same time allows avoiding the loss of powdery material whne filling and delivering.

For example, patent application EP2156146A2 refers to a delivering device for different portions of a powdery food product comprising a container shaped as a tank equipped with a delivering mouth and an insert equipped with a plurality of open rooms, each one of these rooms adapted to keep the powdery food product separated. Every open room of the insert is equipped with a catching device arranged so that, by moving the insert inside the catching device, one room at a time can be brought in register with the delivering mouth for delivering the different portion of the powdery food product.

Patent application EP2156146A2, however, does not solve the problem of preventing powder from going out during maintenance activities manually performed by an operator removing the container from the machine, to be able to perform cleaning or repairing activities.

A problem is being able to remove the container after having closed it, to avoid dispersing powder, thereby fouling the machine, with consequent hygienic problems. A solution to this problem is given by an automatic closing device, while the container is removed. This problem is mentioned in patent application EP2803299A1.

Patent application EP2803299A1 deals with a delivering device and a method for delivering solid materials. The delivering device comprises a container for solid materials, a delivering unit, a lever-type blocking system and a tank. The tank is inserted into a receptacle to engage a rotating arm and unlock a closing plate. The tank also employs a rotating blocking arm to slide a tongue, thereby unlocking a lever and allowing a user to push such lever downwards. By acting in this way, a piston can move, pushing the solid material from an upper portion downwards, along a spiral-type chute. The delivering device can comprise a locking system of the receptacle while the solid material is delivered.

Patent application EP2803299A1 refers in general to closing systems with means to deter the non-authorized opening or removal, with or without signalling means, for example child-proof closures. For such purposes, patent application EP2803299A1 can be used as starting point to define the present invention, in a specific environment for preparing beverages.

US-A-2002/01455010 discloses a container according to the preamble of Claim 1.

Object of the present invention is solving the above prior art problems by providing a container of a substance of ingredients for preparing beverages comprising means adapted to allow their removal from the machine due to replacement, cleaning or repairs, avoiding to pour product powder when handling the container outside of its own operating seat.

A further object of the present invention is providing a container which allows avoiding the direct contact with the powdery product, in the steps in which the container itself is not installed in the machine, also in order to satisfy standards aimed to improve the hygienic conditions of a system for preparing beverages, without any direct contact with the ingredients, both liquid and powdery ones.

A further object of the present invention is providing a container which allows increasing the operating reliability of the machine for preparing beverages, removing the danger of breaking the supplying means for powdery granulates, which are delicate means in case of over-dosage or lack of supply of granulated products inside their supply channels.

A further object of the present invention is providing a container which allows increasing the automation level of a system for preparing beverages, introducing solutions which are adapted for a robotized replacement of the containers of powdery granulated products.

A further object of the present invention is providing a container which allows keeping the machine clean, avoiding to disperse powders.

The above and other objects and advantages of the invention, as will appear from the following description, are obtained with a container of a substance of ingredients for preparing beverages as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non-limiting example, with reference to the enclosed drawings, in which:
- Figures 1, 2 and 3 respectively show a side, a front and a perspective view of a preferred embodiment of the container of a substance of ingredients for preparing beverages according to the present invention;
- Figure 4 shows a perspective view of some components of the container of a substance of ingredients for preparing beverages, according to the present invention;
- Figure 5 shows a front view of the components of Figure 4;
- Figure 6 shows a sectional view along section line VI-VI of Figure 5;
- Figure 7 shows an enlarged part VII of Figure 4, in a first operating configuration;
- Figure 8 shows a front view of the component of Figure 7;
- Figure 9 shows an enlarged part IX of Figure 4 in a second operating configuration; and

Figure 10 shows a front view of the component of Figure 9.

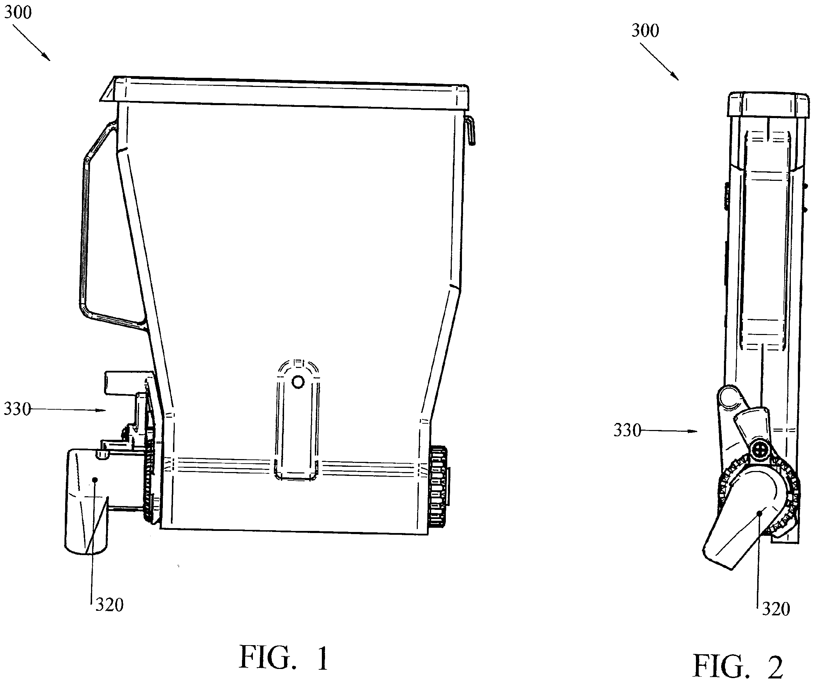

With reference to Figures 1, 2 and 3, it is possible to note that a container 300 of a substance of ingredients for preparing beverages according to the present invention is of a removable type from a seat (not shown) to allow filling, replacing, maintenance and cleaning activities.

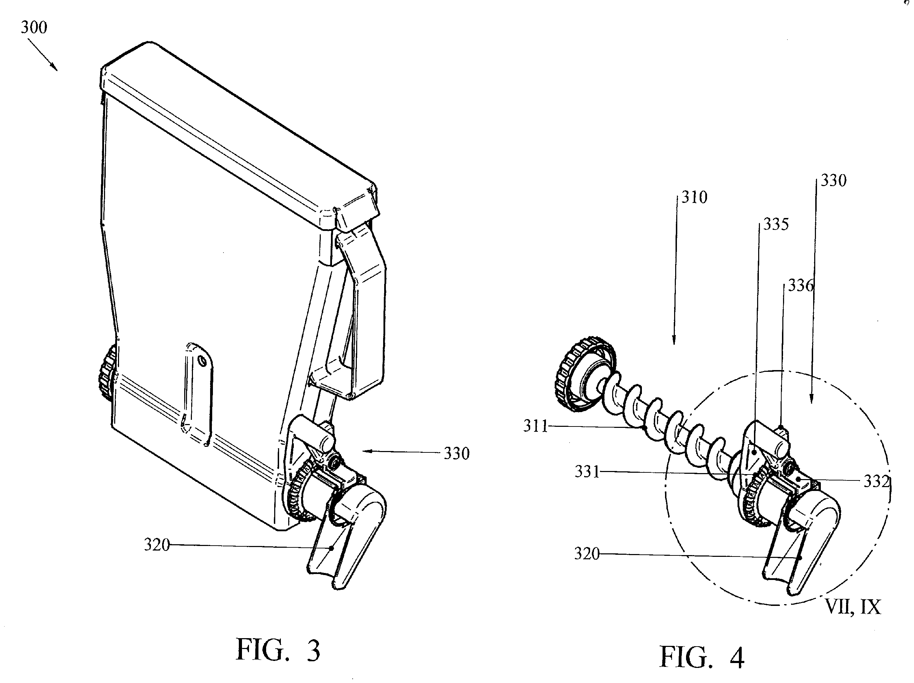

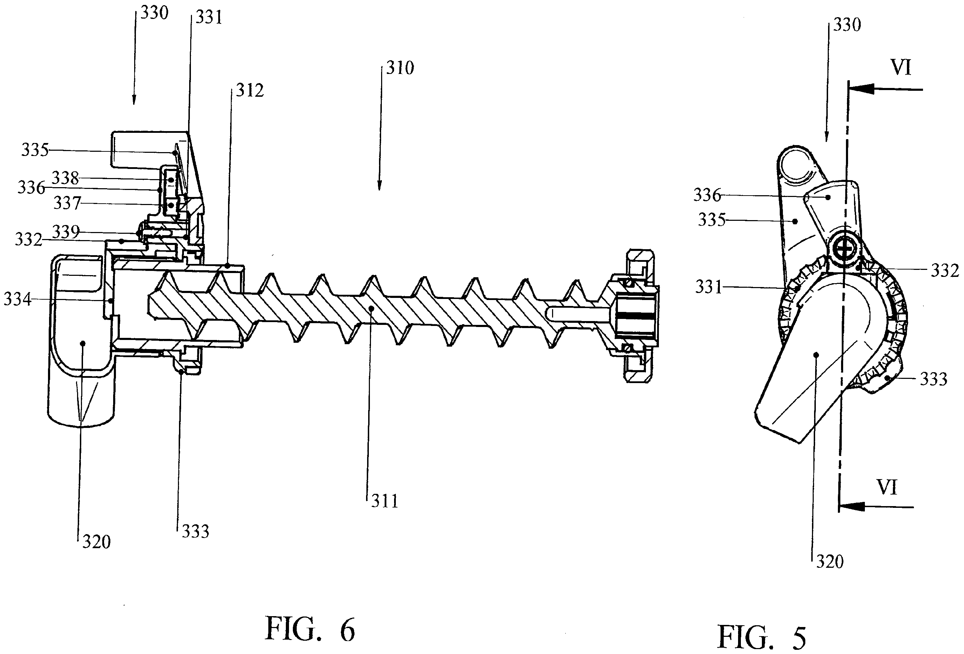

With reference to Figures 4, 5 and 6, it is possible to note that the container 300 comprises batching means 310 adapted to push a controlled amount of substance outside the container 300 and deviating means 320 adapted to address the substance towards external containers (not shown).

Advantageously, the container 300 comprises safety means 330 adapted to open the container 300 blocking it in its own seat (not shown). Such safety means 330 allow closing the container 300 to be able to remove it from its own seat.

Preferably, the safety means 330 comprise at least one lever 331 connected to at least one valve 332. The lever 331 allows opening and closing the valve 332 to intercept the flow of substance. The lever 331 allows locking and unlocking the container 300 with respect to its own seat.

The lever 331 further comprises at least one ring nut equipped with at least one projecting section 333, such projecting section (333) being adapted to interact with at least one locking/unlocking apparatus to block the container 300 in its own seat and to remove the container 300 from its own seat.

The valve 332 comprises at least one mobile wall 334 adapted to interact with the batching means 310 to be able to open/close the container 300.

The lever 331 comprises at least one first arm 335 connected to an actuator (not shown) to allow the movement of the projecting section 333 from a locking position to a unlocking position.

The valve 332 comprises at least one second arm 336 connected to the first arm 335 to allow the movement of the mobile wall 334, from an opened position to a closed position.

The first arm 335 comprises at least one pin 337 adapted to interact with the second arm 336 through the walls of a receptacle 338. The pin 337 and the receptacle 338 are both offset with respect to the rotation axis of the arms 335, 336, in order to allow forming a kinematic reduction between the arms 335, 336 themselves.

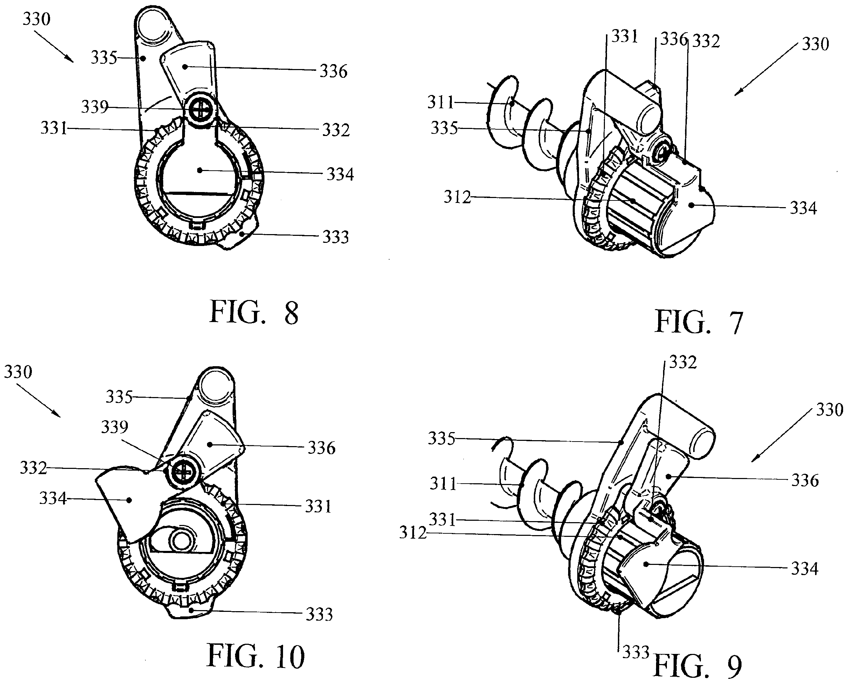

With reference to Figures 7, 8, 9 and 10, it is possible to note that the lever 331 can coaxially rotate with respect to the batching means 310 and the valve 332 can rotate with respect to a fixed axis 339 eccentric with respect to the batching means 310.

According to a variation of the container 300, the first arm 335 is manually actuated.

Moreover, the batching means 310 comprise at least one auger screw 311 having an end inserted in a section of tube 312. Such section of tube 312 allows the valve 332 to intercept the substance going out towards the deviating means 320.

The container of a substance of ingredients in a system for preparing beverages of the present invention allows obtaining the stated objects.

In fact, a system for preparing beverages is a system for closing containers, wherein the containers normally have manual devices for closing/opening the outlet of powders, such manual devices being used at maintenance operators' will, when removing the machine to clean or repair it.

The container of a substance of ingredients for preparing beverages solves the problem for which, by removing the container without closing the outlet of powders, it is very easy to foul the machine adapted to receive and house the container, with consequent hygienic problems. The adopted solution makes it possible to automatically close the container during its removal.

The advantages of the adopted solution are: certainty of closing the container during its movements and handling, and improvement of the hygienic problem due to the absence of leakages of the substance of ingredients.

In particular, the present invention allows the automatic opening of the container, during the step of installing the container inside its own seat.

To be able to install the container it is necessary to insert the container in its own seat when the lever is placed in order to close the valve; to fasten the container, it is necessary to rotate the lever; automatically, the valve opens to allow the product to go out.

The automatic valve opening frees the operator from the need of remembering to open the lever before closing the machine.

Another advantage is given by reductions of the container breakages due to the lack of delivery of powders by the auger screw, which pushes the product against the walls of the valve, till it breaks.

## Claims

1. Container (300) of a substance of ingredients for preparing beverages, said container (300) being of a type extractable from a seat to allow its filling, replacement, maintenance and cleaning activities, comprising batching means (310) adapted to push a controlled amount of substance outside said container (300) and deviating means (320) adapted to address the substance towards external containers, said container (300) comprising safety means (330) adapted to open said container (300) to block said container (300) in its own seat, said safety means (330) adapted to close said container (300) to remove said container (300) from its own seat, said safety means (330) comprising at least one lever (331) connected to at least one valve (332), said lever (331) allowing opening and closing said valve (332) to intercept the flow of substance, said lever (331) allowing locking and unlocking said container (300) with respect to its own seat, **characterized in that** said lever (331) comprises at least one ring nut equipped with at least one projecting section (333), said at least one projecting section (333) adapted to interact with a locking/unlocking apparatus to block said container (300) in its own seat and to remove said container (300) from its own seat.

2. Container (300) according to the previous claim, **characterized in that** said valve (332) comprises at least one mobile wall (334), said mobile wall (334) interacting with said batching means (310) to open/close said container (300).

3. Container (300) according to the previous claim, **characterized in that** said lever (331) comprises at least one first arm (335) connected to an actuator to allow a movement of said at least one projecting section (333) from a locking position to an unlocking position.

4. Container (300) according to the previous claim, **characterized in that** said valve (332) comprises at least one second arm (336) connected to said first arm (335) to allow a movement of said mobile wall (334) from an opened position to a closed position.

5. Container (300) according to the previous claim, **characterized in that** said first arm (335) comprises at least one pin (337) interacting with said second arm (336) through the walls of a receptacle (338), said pin (337) and said receptacle (338) being offset with respect to a rotation axis of said arms (335, 336), in order to allow forming a kinematic reduction between said arms (335, 336).

6. Container (300) according to the previous claim, **characterized in that** said lever (331) coaxially rotates with respect to said batching means (310) and said valve (332) rotates with respect to a fixed axis (339) eccentric with respect to said batching means (310).

7. Container (300) according to claim 5, **characterized in that** said first arm (335) is manually actuated.

8. Container (300) according to any one of the previous claims, **characterized in that** said batching means (310) comprise at least one auger screw (311) having an end inserted in a section of tube (312), said section of tube (312) allowing said valve (332) to intercept the substance going out towards said deviating means (320).

## Patentansprüche

1. Behälter (300) mit einer Substanz von Zutaten für die Zubereitung von Getränken, der genannte Behälter (300) ist aus einer Aufnahme herausziehbar, um die Befüllung, den Ersatz, die Wartung und die Reinigung zu ermöglichen, er enthält Dosiervorrichtungen (310), die dazu dienen, eine kontrollierte Menge der Substanz aus dem genannten Behälter (300) zu schieben und Umführungsvorrichtungen (320), die dazu dienen, die Substanz an äußere Behälter zu leiten, der genannte Behälter (300) enthält Sicherheitsvorrichtungen (330), die dazu dienen, den genannten Behälter (300) zu öffnen, um den genannten Behälter (300) in seiner Aufnahme blockieren zu können, die genannten Sicherheitsvorrichtungen (330) dienen dazu, den genannten Behälter (300) zu schließen, um den genannten Behälter (300) aus seiner Aufnahme entfernen zu können, die genannten Sicherheitsvorrichtungen (330) enthalten mindestens einen Hebel (331), der mit mindestens einem Ventil (332) verbunden ist, der genannte Hebel (331) ermöglicht es, das genannte Ventil (332) zu öffnen und zu schließen, um den Fluss der genannten Substanz zu sperren, der genannte Hebel (331) ermöglicht es, den genannten Behälter (300) in seiner Aufnahme zu blockieren bzw. aus dieser zu lösen, und ist **dadurch gekennzeichnet, dass** der genannte Hebel (331) mindestens eine Nutmutter enthält, die mit mindestens einem hervorstehenden Abschnitt (333) ausgestattet ist, der dazu dient, mit einer Blockierungs-/Freigabevorrichtung zu interagieren, um den genannten Behälter (300) in seiner Aufnahme zu blockieren und um den genannten Behälter (300) aus seiner Aufnahme zu entfernen.

2. Behälter (300) gemäß dem vorhergehenden Patentanspruch, der **dadurch gekennzeichnet ist, dass** das genannte Ventil (332) mindestens eine bewegliche Wand (334) enthält, die genannte bewegliche Wand (334) interagiert mit den genannten Dosiervorrichtungen (310), um den genannten Behälter (300) zu öffnen/schließen.

3. Behälter (300) gemäß dem vorhergehenden Patentanspruch, der **dadurch gekennzeichnet ist, dass** der genannte Hebel (331) mindestens einen ersten Arm (335) enthält, der mit einem Antrieb verbunden ist, um eine Bewegung des genannten mindestens eines hervorstehenden Abschnitts (333) aus einer Blockierungsposition und einer Freigabeposition zu ermöglichen.

4. Behälter (300) gemäß dem vorhergehenden Patentanspruch, der **dadurch gekennzeichnet ist, dass** das genannte Ventil (332) mindestens einen zweiten Arm (336) enthält, der mit dem genannten ersten Arm (335) verbunden ist, um eine Bewegung der genannten beweglichen Wand (334) aus einer offenen Position in eine geschlossene Position zu ermöglichen.

5. Behälter (300) gemäß dem vorhergehenden Patentanspruch, der **dadurch gekennzeichnet ist, dass** der genannte erste Arm (335) mindestens einen Bolzen (337) enthält, der mit dem genannten zweiten Arm (336) durch die Wände eines Sammelbeckens (338) interagiert, der genannte Bolzen (337) und das genannte Sammelbecken (338) sind gegenüber der Drehachse der genannten Arme (335, 336) außerachsig, um eine kinematische Reduktion zwischen den genannten Armen (335, 336) zu bilden.

6. Behälter (300) gemäß dem vorhergehenden Patentanspruch, der **dadurch gekennzeichnet ist, dass** sich der genannte Hebel (331) koaxial zu den genannten Dosiervorrichtungen (310) dreht und dass sich das genannte Ventil (332) gegenüber einer feststehenden exzentrischen Achse (339) gegenüber den genannten Dosiervorrichtungen (310) dreht.

7. Behälter (300) gemäß Patentanspruch 4, der **dadurch gekennzeichnet ist, dass** der genannte erste Arm (335) manuell angetrieben wird.

8. Behälter (300) gemäß dem vorhergehenden Patentanspruch, der **dadurch gekennzeichnet ist, dass** die genannten Dosiervorrichtungen (310) mindestens eine Schneckenschraube (311) enthalten, deren eines Ende in einen Rohrabschnitt (312) eingeführt ist, der genannte Rohrabschnitt (312) ermöglicht es dem genannten Ventil (332), die zu den genannten Umführungsvorrichtungen (320) austretende Substanz zu sperren.

## Revendications

1. Conteneur (300) d'ingrédients pour préparer des boissons pouvant être extrait de son logement pour permettre les activités de remplissage, remplacement, maintenance et nettoyage et comprenant des moyens de dosage (310) aptes à pousser une quantité contrôlée de substance vers l'extérieur du conteneur (300) et des moyens de déviation (320) aptes à acheminer la substance vers des conteneurs externes ; le conteneur (300) comprend des moyens de sécurité (330) aptes à l'ouvrir et à le bloquer dans son logement, ces moyens (330) permettent également de fermer le conteneur (300) pour le retirer de son logement ; les moyens de sécurité (330) comprennent au moins un levier (331) relié au moins à une vanne (332) permettant d'ouvrir et de fermer cette dernière pour intercepter le flux de la substance ; le levier (331) permet aussi de bloquer et débloquer le conteneur (300) de son logement, caractérisé en que le levier (331) comprend au moins une bague dotée d'un morceau en saillie (333) apte à interagir avec un dispositif de blocage/déblocage pour bloquer/débloquer le conteneur (300) de son logement.

2. Conteneur (300) selon la revendication précédente, **caractérisé en ce que** la vanne (332) comprend au moins une cloison mobile (334) qui interagit avec les moyens de dosage (310) pour ouvrir/fermer le conteneur (300).

3. Conteneur (300) selon la revendication précédente, **caractérisé en ce que** le levier (331) comprend au moins un premier bras (335) relié à un actionneur pour permettre le déplacement du morceau en saillie (333) de la position de blocage à la position de déblocage.

4. Conteneur (300) selon la revendication précédente, **caractérisé en ce que** la vanne (332) comprend au moins un second bras (336) relié au premier bras (335) pour permettre le déplacement de la cloison mobile (334) de la position d'ouverture à la position de fermeture.

5. Conteneur (300) selon la revendication précédente, **caractérisé en ce que** le premier bras (335) comprend au moins un pivot (337) qui interagit avec le second bras (336) à travers les parois d'un réceptacle (338) ; le pivot (337) et le réceptacle (338) sont désaxés par rapport à l'axe de rotation des bras (335, 336) pour former une réduction cinématique entre les bras (335, 336).

6. Conteneur (300) selon la revendication précédente, **caractérisé en ce que** le levier (331) tourne de manière coaxiale par rapport aux moyens de dosage (310) et la vanne (332) tourne autour d'un axe fixe (339) excentrique par rapport aux moyens de dosage (310).

7. Conteneur (300) selon la revendication 4, **caractérisé en ce que** le premier bras (335) est actionné manuellement.

8. Conteneur (300) selon l'une des revendications précédentes, **caractérisé en ce que** les moyens de dosage (310) comprennent au moins une vis sans fin (311) dont une extrémité est insérée dans un morceau de tube (312) qui permet à la vanne (332) d'intercepter la substance en sortie vers les moyens de déviation (320).
